# EUROPEAN PATENT APPLICATION

(11) **EP 1 583 343 A2**
(43) Date of publication of application: **05.10.2005**
(21) Application number: 05075588.3
(22) Date of filing: 10.03.2005
(51) Int. Cl.: H04N 1/00

(54) **Computer and fax communication system**

(30) Priority: 02.04.2004 GB 0407555
(71) Applicant: Siemens AG, 80333 München (DE)
(72) Inventor: Hoffmann, Holger, 58239 Schwerte (DE)
(74) Representative: Neill, Andrew Peter

(57) **Abstract**

A method of initiating and transmitting operational data from a computer to a remote fax machine comprising: generating commands for operating fax on a computer; interpretation of said commands into LAN commands in a particular protocol for dissemination over a LAN; receiving said LAN commands of step (ii) by means of a gateway, said gateway interpreting the LAN commands into FAX commands, and receiving said FAX demands at said fax machine to operatively control said FAX.

## Description

This invention relates to a method and system for operating remote FAX machines from computers (e.g. PC's and the like.)

At present typically, a modified a dynamic link library (DDL) is operated by a computer which instigates operation of the FAX machine. This DDL ensures that calls can be directed to gateways (such as the HG 1500).The term "gateway" is effectively a protocol change unit (e.g. CAPI to ISDN).

These calls typically use the Common ISDN Application Programming Interface (CAPI). On such gateways these CAPI calls are decrypted and with the help of digital signal processors and are converted into non digital format e.g. sound signals. Subsequently these are changed by a further digital signal processors to IP information and sent to another gateway. Here the IP packets are converted by further digital processing and to a FAX machine. The problem with this solution is that it involves a lot of digital processing resources which means extra hardware and processing time. Along with this extra processing is the subsequent inherent proneness to errors.

The invention reduces the above problem by reducing the digital signal processing required as a consequence of reducing the amount of conversion.

The invention comprises a method of initiating and transmitting operational data from a computer to a remote fax machine comprising: generating commands for operating fax on a computer; interpretation of said commands into LAN commands in a particular protocol for dissemination over a LAN; receiving said LAN commands by means of a gateway, said gateway interpreting the LAN commands into FAX commands, receiving said FAX demands at said fax machine to operatively control said FAX.

In this way by meshing together a plurality of gateways, and conversion of standard protocols, digital signal processing resources can be reduced.

Preferably the invention makes use of the fact that most PC/FAX apparatus support CAPI protocol. Means are provided for converting and providing FAX data in CAPI protocol to an IP format (e.g. T 38 protocol)

The invention will now be described by means of example only and with reference to the following figures of which:
Figure 1 shows an example of the prior art.
Figure 2 shows an example of the invention.
Figure 3 shows an example of timing of data and command signals in the figure 2 embodiment

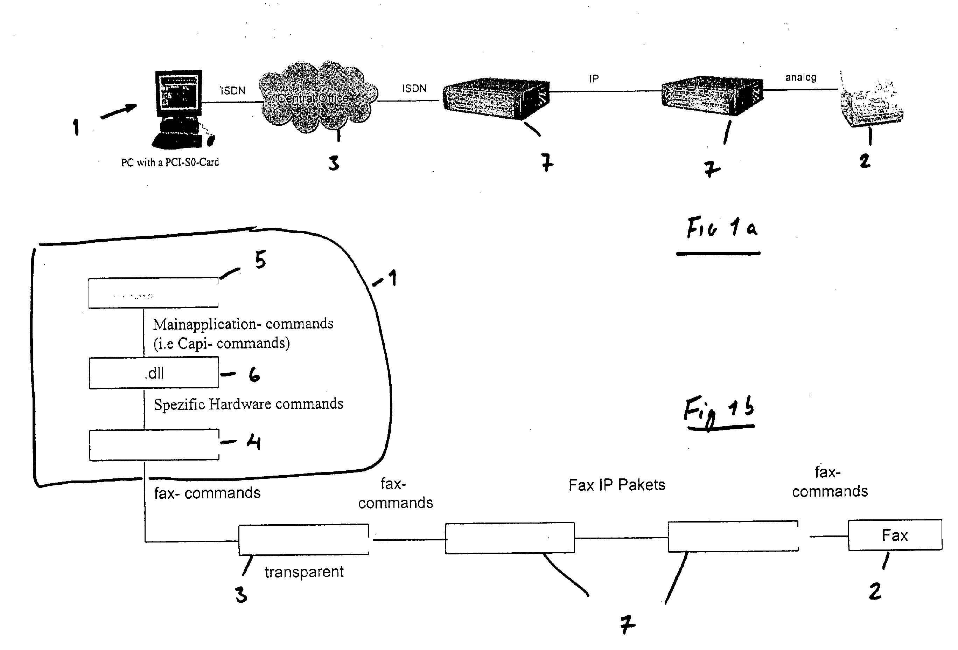

Figures 1a and 1b illustrates an example of common current operation of a PC controlled FAX machine. In general a computer such as a PC 1 is connected to a remote FAX 2 via a transparent central office 3 ("transparent central office" means the physical part were the non digital signals are transported e.g. British Telecom). The computer includes a PCI-SO card 4. Fig 1b illustrates the command procedure in such current systems. A main application exists on the PC 5 and commands are initiated. In the example these are CAPI commands. A dynamic link library (DLL) 6 converts these into specific hardware commands and these are sent to a PCI_ISDN card which regulates the electronic devices on the hardware. The fax data in the commands are converted into non digital signals and then transmit it over the physical layer. The fax commands are then sent via a central office and telephone/LAN/ Internet system 7 to the FAX machine 2.

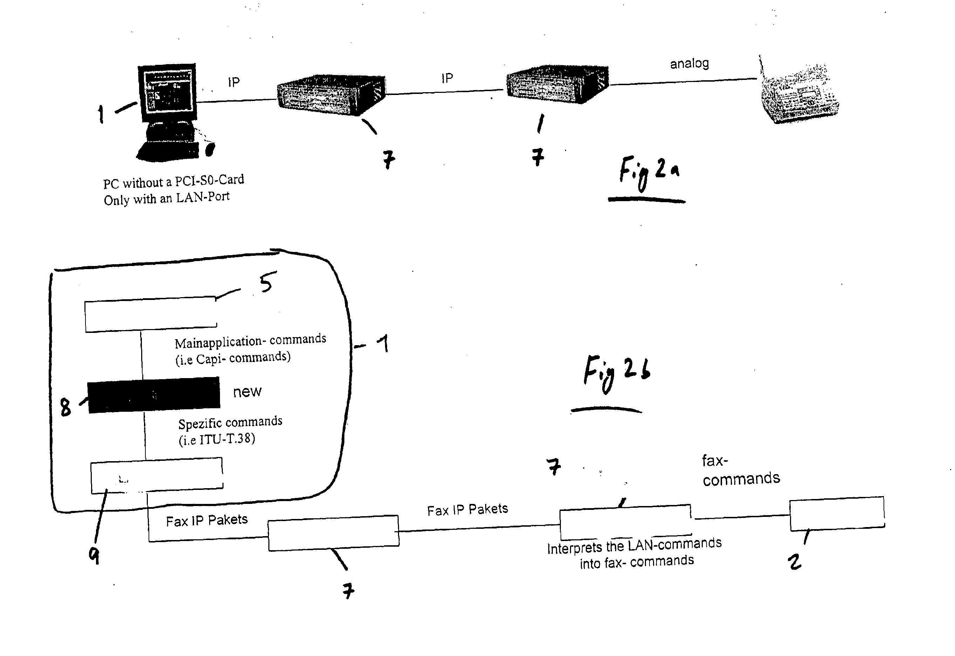

Figures 2a and 2b illustrates an example of the invention to show the differences with the prior art of figure 1. In the example there is no need for the card and the PC has a LAN port and driver 9 only. Again there is a main application 1. The DDL software formulates protocol specific commands (i.e. ITU-T.38). These commands are via a LAN driver 9 direct to at least one LAN/telephone/ Internet system 7 which acts as a gateway which interprets the LAN commands into FAX commands. The figure shows two gateways, one connected to the PC via a LAN and the other connected to a FAX via a LAN. The two gateways are connected via a WAN or LAN. This is preferably done using a standard protocol such as T.38. (we perhaps need brief details of how this is done) The DLL software converted CAPI commands into the protocol specific commands. E.g. there can be one CAPI command but two or more protocol commands. The start of a communication in the IP for T.38 is H.323, the fax data are transmitted in T.38 commands, and the end of a communication in H.323. This is a standard of the fax communication over T.38 IP.

From the LAN connected to the PC the FAX data is transmitted as a standard protocol such as CAPI. Internally the CAPI signal can be converted to PCM data and then to IP Packet Data. PCM data (signals representing sound (tone frequency) can be transmitted via a coupling field. To this coupling an analogue Fax machine may additionally be connected.

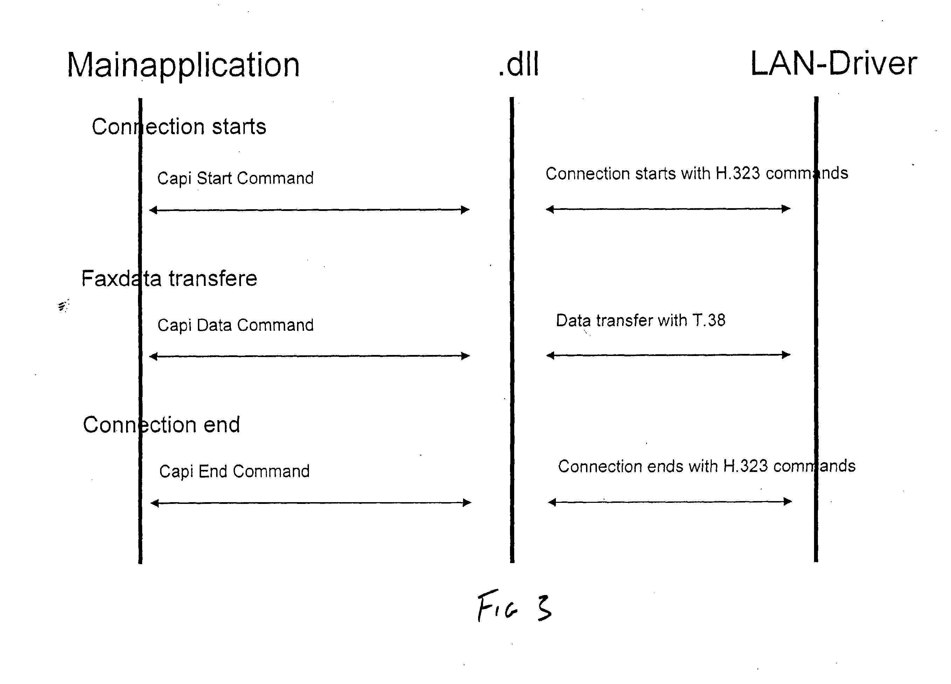

Figure 3 shows the sequence of events in the example of figure 2.

## Claims

1. A method of initiating and transmitting operational data from a computer to a remote fax machine comprising:
i) generating commands for operating fax on a computer;
ii) interpretation of said commands into LAN commands in a particular protocol for dissemination over a LAN;
iii) receiving said LAN commands of step (ii) by means of a gateway, said gateway interpreting the LAN commands into FAX commands,
iv) receiving said FAX demands at said fax machine to operatively control said FAX.

2. A method as claimed in claim 1 wherein step (i) is performed by a dynamic link library.

3. A method as claimed in claims 1 or 2 wherein said commands of step (i) are CAPI commands.

4. A method as claimed in claim wherein said particular protocol of step (ii) is the ITU - T.38 protocol.

5. A method as claimed in any preceding claims wherein CAPI commands into the protocol specific commands
